# EUROPEAN PATENT APPLICATION

(11) **EP 4 683 078 A1**
(43) Date of publication of application: **21.01.2026**
(21) Application number: 23927045.7
(22) Date of filing: 31.08.2023
(51) Int. Cl.: H01M 50/30, H01M 10/658, H01M 50/244, H01M 50/204

(54) **PRESSURE RELIEF STRUCTURE AND CYLINDRICAL BATTERY PACK APPLYING PRESSURE RELIEF STRUCTURE**

(30) Priority: 16.03.2023 CN 202320524081 U
(71) Applicant: Eve Energy Co., Ltd., Huizhou, Guangdong 516006 (CN)
(72) Inventor: LIU, Shunmin, Huizhou, Guangdong 516006 (CN)
(74) Representative: Berggren Oy
(86) International application number: PCT/CN2023/116225
(87) International publication number: WO 2024/187699

(57) **Abstract**

A pressure relief structure includes a bottom plate (1). The bottom plate (1) is provided with exhaust channels (11). Two ends of each of the exhaust channels (11) are exhaust ports (12). A plurality of exhaust channels (11) are provided. The plurality of exhaust channels (11) are arranged side by side. At least one heat insulation cavity (17) is provided between adjacent two of the exhaust channels (11). The heat insulation cavity (17) is hollow. The exhaust channels (11) are provided with a plurality of cell pressure relief vents (13). The cell pressure relief vents (13) are provided corresponding to the cells (22).

## Description

This application claims priority to Chinese Patent Application No. 202320524081.X filed with the Chinese Patent Office on March 16, 2023. The disclosure of which is incorporated herein by reference in its entirety.

### TECHNICAL FIELD

The present disclosure relates to the field of battery technologies, and in particular, to a pressure relief structure and a cylindrical battery group applying the pressure relief structure.

### BACKGROUND

When batteries are impacted by external environment, they are prone to short circuits, resulting in fires. When a thermal safety incident occurs in one cell, high-temperature gas generated by heat will spread rapidly to all cells, posing a risk of thermal runaway in other cells.

### SUMMARY

### TECHNICAL PROBLEM

An objective of the present disclosure is to provide a pressure relief structure, so as to at least solve the problem in the prior art that after a thermal safety incident occurs in one cell, hot high-temperature gas generated spread rapidly to all cells, posing a risk of thermal runaway in other cells.

### TECHNICAL SOLUTIONS

According to a first aspect, a pressure relief structure is provided by the present disclosure. The pressure relief structure includes a bottom plate. The bottom plate is provided with exhaust channels. Two ends of each of the exhaust channels are provided as exhaust ports.

A plurality of exhaust channels are provided side by side. At least one heat insulation cavity is provided between adjacent two of the plurality of exhaust channels. The heat insulation cavity is hollow.

The exhaust channels are provided with a plurality of cell pressure relief vents. The cell pressure relief vents are provided corresponding to cells.

According to a second aspect, a cylindrical battery pack applying the pressure relief structure is provided by the present disclosure. The cylindrical battery pack includes cells and the pressure relief structure. A plurality of cells are provided. The cells are arranged on the bottom plate in a matrix or honeycomb. Each of the plurality of cell pressure relief vents corresponds to one of the plurality of cells. At least the cells in one column correspond to one of the exhaust channels.

### BENEFICIAL EFFECTS

In the pressure relief structure on a bottom of a battery of the present disclosure, the insulation cavity is provided between adjacent two of the exhaust channels. Since the heat insulation cavity is hollow, heat transfer is reduced. When a thermal safety incident occurs in one of the cells, hot high-temperature gas is prevented from spreading rapidly to all cells, thereby improving the safety performance of the battery. Furthermore, since the heat insulation cavity is provided, compared with the bottom plate provided with only the exhaust channels in the prior art, a structure of the heat insulation cavity is equivalent to providing reinforcing ribs inside the bottom plate, so as to improve a strength of the bottom plate. The utility model application improves the pressure relief ability and the structural strength of the battery.

### BRIEF DESCRIPTION OF THE DRAWINGS

FIG. 1 is an exploded view according to the embodiments of the present disclosure.
FIG. 2 is a schematic structural view of a frame provided with a pressure relief port according to the embodiments of the present disclosure.
FIG. 3 is a schematic structural view of a bottom plate according to the embodiments of the present disclosure.
FIG. 4 is a cross-sectional view of a bottom plate according to the embodiments of the present disclosure.

1, bottom plate; 11, exhaust channel; 12, exhaust port; 13, cell pressure relief vent; 14, upper plate; 15, lower plate; 16, rib plate; 161, first rib plate; 162, second rib plate; 17, heat insulation cavity; 2, cell group support plate; 21, cell limiting arc-shaped groove; 22, cell; 3, frame; 31, lateral side beam; 32, side beam; 33, side beam pressure discharge port; 34, side beam pressure relief port; 35, first step; 36, second step; 37, third step; 38, fourth step.

### DETAILED DESCRIPTION

It should be noted that in the description, claims, and accompanying drawings of the present disclosure, terms "first", "second", etc., are intended to distinguish between similar objects but do not necessarily indicate a specific order or sequence.

In an embodiment, a bottom plate includes an upper plate and a lower plate. Rib plates are disposed between the upper plate and the lower plate. A plurality of exhaust channels and the heat insulation cavity are formed through separating the rib plates.

In an embodiment, the rib plates between adjacent two of the plurality of exhaust channels are arranged in pairs. The rib plates arranged in pairs include a first rib plate and a second rib plate. The heat insulation cavity is defined between the first rib plate and the second rib plate.

In an embodiment, a cross section of the heat insulation cavity is smaller than a cross section of each of the plurality of exhaust channels.

In an embodiment, the cross section of each of the plurality of exhaust channels is a funnel-shaped structure with a wide top and a narrow bottom.

In an embodiment, the pressure relief structure further includes a frame. The frame is a rectangular frame surrounded by side beams. The bottom plate is mounted at a bottom of the frame.

Any one of the side beams of the frame is provided with a side beam pressure discharge port. A side of one of the side beams away from the side beam pressure discharge port is provided with a side beam pressure relief port.

The plurality of exhaust channels on the bottom plate are communicated with the side beam pressure discharge port, and the side beam pressure discharge port is communicated with the side beam pressure relief port.

In an embodiment, the lower plate at an end of the bottom plate where the exhaust ports are provided is longer than the upper plate to form a staircase.

A bottom of one of the side beams opposite to the exhaust ports is provided with steps, and after the bottom plate and the frame are mounted, a cavity is provided between the staircase at the end of the bottom plate and one of the steps at a bottom of a corresponding one of the side beams, and the cavity is configured as a pressure relief channel.

In an embodiment, the steps include a first step, a second step, a third step, and a fourth step sequentially arranged. The side beam pressure discharge port is provided between the second step and the third step.

A side end of the lower plate abuts against a side surface of the first step. An upper end surface of the lower plate is connected to the second step. The upper plate abuts against a side surface of the third step. An upper end surface of the upper plate is connected to the fourth step.

The pressure relief channel is provided between the bottom plate and the third step.

In an embodiment, each of the plurality of exhaust channels is a through channel in a straight-line shape.

In an embodiment, the pressure relief structure further includes a cell group supporting plate. The cell group supporting plate is mounted on an upper surface of the bottom plate. The cell group supporting plate is provided with cell mounting positions. A middle of each of the cell mounting positions is provided with a through hole, and the through hole on the cell mounting positions correspond to one of the cell pressure relief vents.

### Embodiment 1

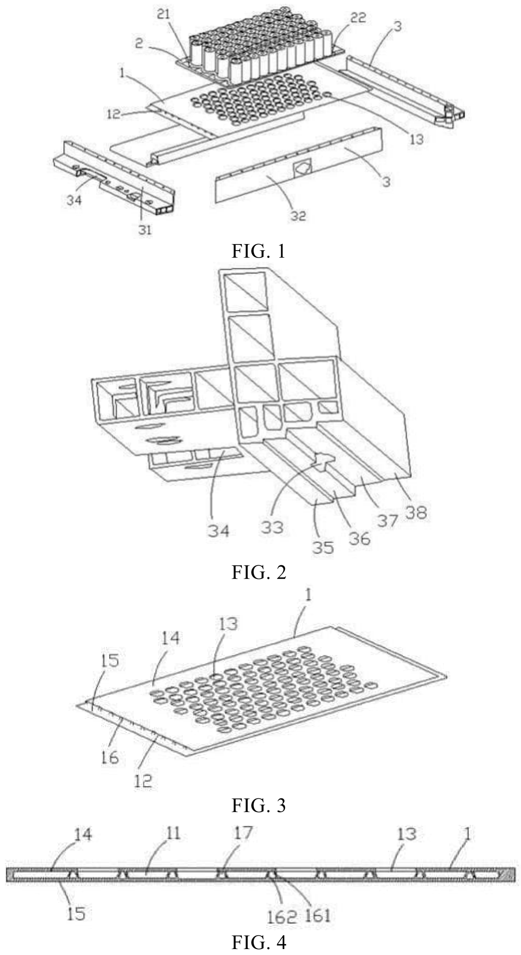

This embodiment discloses a pressure relief structure. As shown in FIG. 3 and FIG. 4, the pressure relief structure includes a bottom plate 1. The bottom plate 1 is provided with exhaust channels 11. Two ends of each of the exhaust channels 11 are provided as exhaust ports 12.

A plurality of exhaust channels 11 are provided. The plurality of exhaust channels 11 are provided side by side. Each heat insulation cavity 17 is provided between adjacent two of the exhaust channels 11. The heat insulation cavity 17 is hollow. At least one heat insulation cavity 17 is provided between adjacent two of the exhaust channels 11.

The exhaust channels 11 are provided with cell pressure relief vents 13. A plurality of cell pressure relief vents 13 are provided.

Specifically, cells 22 are mounted an upper portion of the bottom plate 1. The exhaust channels 11 are communicated with external environment for pressure relief. The heat insulation cavity 17 is hollow inside and does not participate in pressure relief. When a problem occurs in a certain one of the cells 22 or the cells 22 in a column on a certain one of the exhaust channels 11, the exhaust channels 11 at a lower portion of the cells 22 in the column exhausts for pressure relief. The heat insulation cavity 17 is hollow to reduce heat transfer and play a certain role in isolation.

In the pressure relief structure on a bottom of a battery of the embodiments of the present disclosure, the insulation cavity 17 is provided between adjacent two of the exhaust channels 11. When a thermal safety incident occurs in one of the cells 22, hot high-temperature gas is prevented from spreading rapidly to all cells 22, thereby improving the safety performance of the battery. Furthermore, since the heat insulation cavity 17 is provided, compared with the bottom plate provided with only the exhaust channels in the prior art, a structure of the heat insulation cavity 17 is equivalent to providing reinforcing ribs inside the bottom plate 1 to improve a strength of the bottom plate 1. The present disclosure improves the pressure relief ability and structural strength of the battery.

Optionally, each exhaust channel 11 is a through channel in a straight-line shape.

Specifically, each exhaust channel 11 in the bottom plate 1 may be in a shape optionally selected from curve, an arc, or a straight line. Preferably, in the present disclosure, each exhaust channel 11 is an exhaust channel in a straight-line shape.

In the embodiments of the present disclosure, since each exhaust channel 11 is the through channel in the straight line-shape, hot high-temperature gas is discharged more smoothly and rapidly, thereby reducing a risk of safety accidents.

Optionally, the bottom plate 1 includes an upper plate 14 and a lower plate 15. Rib plates 16 are provided between the upper plate 14 and the lower plate 15. The exhaust channels 11 and the heat insulation cavity 17 are formed through separating the rib plates 16.

The rib plates 16 between adjacent two of exhaust channels 11 are arranged in pairs. The rib plates 16 arranged in pairs include a first rib plate 161 and a second rib plate 162. The heat insulation cavity 17 is defined between the first rib plate 161 and the second rib plate 162.

Compared with the prior art, in the embodiments of the present disclosure, at least one more rib plate 16 is disposed between adjacent two of the exhaust channels 11. Generally, the bottom plate 1 is provided with the plurality of exhaust channels, so the number of the rib plates 16 used is increased. A support strength of the bottom plate 1 for the cells 22 is improved, and the structural strength of the battery pack is improved.

Optionally, a cross section of the heat insulation cavity 17 is smaller than a cross section of each of the exhaust channels 11.

In the embodiments of the present disclosure, when the cross section of the heat insulation cavity 17 is smaller than the cross section of each of the exhaust channels 11, the heat insulation cavity 17 occupies a small space, and a space of the exhaust channels 11 is sufficient for exhaust. As such, the exhaust performance of the exhaust channels 11 is not affected.

Optionally, the cross section of each of the exhaust channels 11 is a funnel-shaped structure with a wide top and a narrow bottom.

Specifically, the rib plates 16 on two sides of each of the exhaust channels 11 are inclined in opposite directions, so that the cross section of each of the exhaust channel 11 is in a shape with a wide top and a narrow bottom. The inclined rib plates 16 further play a role of flow guiding. Preferably, an included angle between the bottom plate 1 and each of the rib plates 16 is in arc transition, so as to further enhance the flow guiding effect.

The embodiments of the present disclosure are more conducive to the rapid discharge of gas when there is a problem with the cells 22.

Optionally, the pressure relief structure further includes a frame 3. As shown in FIG. 1, the frame 3 is a rectangular frame surrounded by side beams. The bottom plate 1 is mounted at a bottom of the frame 3.

As shown in FIG. 2, any one of the side beams of the frame 3 is provided with a side beam pressure relief port 33. A side of one of the side beams away from the side beam pressure relief port 33 is provided with a side beam pressure relief port 34.

The exhaust channels 11 on the bottom plate 1 are communicated with the side beam pressure discharge port 33. The side beam pressure discharge port 33 is communicated with the side beam pressure discharge port 34.

Specifically, the frame 3 includes lateral side beams 31 and side beams 32. Taking a case where the exhaust channels 11 are provided along a length direction of the bottom plate 1 as an example, the lateral side beams 31 are opposite to the exhaust ports 12 of the bottom plate 1. The lateral side beam 31 is provided with a pressure relief channel (not shown in the figures). The exhaust ports 12 of the bottom plate 1 are communicated to the pressure relief channel.

In the embodiments of the present disclosure, hot gas in the bottom plate 1 enters the pressure relief channel along the exhaust channels 11 and the exhaust ports 12, and is discharged from the side beam pressure relief port 34 through the side beam pressure relief port 33, so as to rapidly and smoothly discharge and release pressure.

Optionally, the lower plate 15 at an end of the bottom plate 1 where the exhaust ports 12 are provided is longer than the upper plate 14 to form a staircase shape.

A bottom of the side beam opposite to the exhaust ports 12 is provided with steps. After the bottom plate 1 and the frame 3 are mounted, a cavity is provided between the staircase at the end of the bottom plate 1 and a corresponding one of the steps at the bottom of the side beam. The cavity is configured as the pressure relief channel.

In the embodiments of the present disclosure, the cavity enclosed by the bottom plate 1 and the side beams is provided as the pressure relief channel, so as to prevent the pressure relief channel from being additionally provided, and facilitate sealing, thereby simplifying the structure.

Optionally, as shown in FIG. 2, the steps include a first step 35, a second step 36, a third step 37, and a fourth step 38. The first step 35, the second step 36, the third step 37, and the fourth step 38 are sequentially arranged. The side beam pressure discharge port 33 is located between the second step 36 and the third step 37.

A side end of the lower plate 15 abuts against a side surface of the first step 35. An upper end surface of the lower plate 15 is connected to the second step 36. The upper plate 14 abuts against a side surface of the third step 37. An upper end surface of the upper plate 14 is connected to the fourth step 38.

The pressure relief channel is located between the bottom plate 1 and the third step 37.

Specifically, the side end of the lower plate 15 abuts against the side surface of the first step 35, and the upper plate 14 abuts against the side surface of the third step 37. In the structure, the side surface of the first step 35 and the side surface of the third step 37 play a limiting role, so as to facilitate the mounting operation and also make the bottom plate 1 and the frame 3 tightly combined. The upper end surface of the lower plate 15 is connected to the second step 36, and the upper end surface of the upper plate 14 is connected to the fourth step 38, so as to further play a sealing role.

In this embodiment, the bottom plate 1 and the frame 3 have good sealing effect, so as to prevent the hot gas in the pressure relief channel from leaking into a box. Furthermore, the structure improves the strength of the frame 3.

Optionally, a cell group supporting plate 2 is further provided. The cell group supporting plate 2 is provided with cell 22 mounting positions. A middle of each of the cell 22 mounting positions is a through hole. The through hole on the cell 22 mounting positions corresponds to one of the cell pressure relief vents 13 on the bottom plate 1.

Specifically, the frame 3 is fixed at a peripheral edge of the bottom plate 1. The cell group supporting plate 2 is mounted on the bottom plate 1. Each of the cell 22 mounting positions is opposite to a corresponding one of the cell pressure relief vents 13. Heat dissipated by the cells 22 enters the exhaust channels 11 through the through holes of the cell 22 mounting positions and the cell pressure relief vents 13.

In the battery pack of the prior art, the cell group support plate, a pack bottom plate, and the bottom pressure relief structure are generally sequentially arranged at a lower portion of the cells. In the embodiments of the present disclosure, the pack bottom plate and the cell support plate of the original battery pack are designed as an integral structure, i.e., the cell group support plate 2, so that the original pack bottom plate design is eliminated, and the bottom plate in the present disclosure is equivalent to the bottom pressure relief structure in the prior art.

In the embodiments of the present disclosure, since the original battery pack bottom plate is combined with the cell support plate, a support strength of the battery pack 22 is improved, and a capability of bearing a bottom ball strike on a bottom of the battery pack is improved.

Optionally, an outer side of each of the cell 22 mounting positions is provided with a cell limiting arc-shaped groove 21. The limiting arc-shaped groove is coaxial with a corresponding one of the cell 22 mounting positions.

Specifically, during mounting, each cell 22 is fixed at the corresponding one of the cell 22 mounting positions, and the cell limiting arc-shaped groove 21 is located at a periphery of the cell 22, so as to play a role of fixing and limiting.

Optionally, the bottom plate 1 is made of aluminum manufactured through an integral extrusion process.

### Embodiment 2

A cylindrical battery pack applying the pressure relief structure is further provided. As shown in FIG. 1, the cylindrical battery pack includes the cells 22 and the pressure relief structure. A plurality of cells 22 are provided. The cells 22 are arranged in a matrix or honeycomb on the bottom plate 1. Each of the cell pressure relief vents 13 corresponds to one of the cells 22. At least the cells 22 in each column correspond to one of the exhaust channels 11.

Specifically, the lower portion of the cells 22 is the cell group support plate 2 and the bottom plate 1 in sequence. Taking the exhaust channels 11 arranged along the length direction of the bottom plate 1 as an example, the lateral side beams 31 are opposite to the exhaust ports 12 of the bottom plate 1. One of the lateral side beams 31 is provided with a pressure relief channel. The exhaust ports 12 of the bottom plate 1 are communicated with the pressure relief channel. The gas in the exhaust channels 11 enters the side beam pressure relief port 33 through the pressure relief channel and is discharged from the side beam pressure relief port 34. Optionally, the exhaust channel 11 may also be arranged along a width direction of the bottom plate 1.

In the prior art, a pack (i.e., a battery pack) bottom plate is provided at the bottom of the battery. However, only a few or no support points are provided between the pack bottom plate and the cell support plate in the prior art, an overall strength of the pack bottom plate and the cell support plate is relatively poor, resulting in poor support for the cells. Thus, the structural strength of the pack bottom plate is relatively poor and unable to withstand a ball impact from the bottom. In addition, the pack bottom plate and the cell supporting plate are designed separately, and there are no more support structures. During a vibration process, a mode of the pack bottom plate is relatively lower, resulting in a risk flapping the cell supporting plate. In addition, the pack bottom plate and the cell support plate are communicated with each other on a hole surface, and when a thermal safety incident occurs in one of the cells, the hot high-temperature gas will quickly propagate to all cells, resulting in a risk of thermal runaway in other cells.

In the embodiments of the present disclosure, the pack bottom plate and the cell support plate in the prior art are designed as an integral structure, i.e., the cell group support plate 2, so as to improve the support strength of the cells 22, the ability of the bottom of the battery pack to bear the bottom ball strike is improved, and the problem of the original battery pack bottom plate flapping the cell supporting plate is solved. The bottom plate 1 of the present disclosure solves the problem that thermal runaway is easily generated when the pack bottom plate and the cell supporting plate are communicated with each other on an entire surface. In the embodiments of the present disclosure, timely and safe pressure relief is achieved, and the strength and support capability of the bottom plate are provided by the rib plates 16.

## Claims

1. A pressure relief structure, comprising a bottom plate, wherein the bottom plate is provided with exhaust channels, and two ends of each of the exhaust channels are configured as exhaust ports ;
wherein a plurality of exhaust channels are arranged side by side, at least one heat insulation cavity is provided between adjacent two of the plurality of exhaust channels, and the heat insulation cavity is hollow; and
wherein a plurality of cell pressure relief vents are provided on the plurality of exhaust channels, and the plurality of cell pressure relief vents are provided corresponding to cells.

2. The pressure relief structure according to claim 1, wherein the bottom plate comprises an upper plate and a lower plate, rib plates are disposed between the upper plate and the lower plate, and the plurality of exhaust channels and the at least one heat insulation cavity are formed through separating the rib plates.

3. The pressure relief structure according to claim 2, wherein the rib plates between adjacent two of the plurality of exhaust channels are arranged in pairs, the rib plates arranged in pairs comprise a first rib plate and a second rib plate, and the at least one heat insulation cavity is defined between the first rib plate and the second rib plate.

4. The pressure relief structure according to claim 1, wherein a cross section of the at least one heat insulation cavity is smaller than a cross section of each of the plurality of exhaust channels.

5. The pressure relief structure according to claim 1, wherein a cross section of each of the plurality of exhaust channels is a funnel-shaped structure with a wide top and a narrow bottom.

6. The pressure relief structure according to claim 2, wherein the pressure relief structure further comprises a frame, the frame is a rectangular frame surrounded by side beams , and the bottom plate is mounted at a bottom of the frame;
wherein any one of the side beams of the frame is provided with a side beam pressure discharge port, and a side of one of the side beams away from the side beam pressure discharge port is provided with a side beam pressure relief port; and
wherein the plurality of exhaust channels on the bottom plate are communicated with the side beam pressure discharge port, and the side beam pressure discharge port is communicated with the side beam pressure relief port.

7. The pressure relief structure according to claim 6, wherein the lower plate at an end of the bottom plate where the exhaust ports are provided is longer than the upper plate to form a staircase; and
wherein a bottom of one of the side beams opposite to the exhaust ports is provided with steps, and after the bottom plate and the frame are mounted, a cavity is provided between the staircase at an end of the bottom plate and one of the steps at a bottom of a corresponding one of the side beams, and the cavity is configured as a pressure relief channel.

8. The pressure relief structure according to claim 7, wherein the steps comprise a first step, a second step, a third step, and a fourth step sequentially arranged, and the side beam pressure discharge port is provided between the second step and the third step;
wherein a side end of the lower plate abuts against a side surface of the first step, an upper end surface of the lower plate is connected to the second step, the upper plate abuts against a side surface of the third step, and an upper end surface of the upper plate is connected to the fourth step; and
wherein the pressure relief channel is provided between the bottom plate and the third step.

9. The pressure relief structure according to any one of claims 1 to 8, wherein each of the plurality of exhaust channels is a through channel in a straight-line shape.

10. The pressure relief structure according to any one of claims 1 to 8, wherein the pressure relief structure further comprises a cell group supporting plate, the cell group supporting plate is mounted on an upper end of the bottom plate, the cell group supporting plate is provided with cell mounting positions, a middle of each of the cell mounting positions is provided with a through hole, and the through hole on the cell mounting positions correspond to one of the cell pressure relief vents.

11. A cylindrical battery pack applying the pressure relief structure according to any one of claims 1 to 10, wherein the cylindrical battery pack comprises cells and the pressure relief structure, a plurality of cells are provided, the plurality of cells are arranged on the bottom plate in a matrix or honeycomb, each of the cell pressure relief vents corresponds to one of the cells, and at least the cells in each column correspond to one of the exhaust channels .
